# EUROPEAN PATENT APPLICATION

(11) **EP 2 629 043 A2**
(43) Date of publication of application: **21.08.2013**
(21) Application number: 13466002.6
(22) Date of filing: 11.02.2013
(51) Int. Cl.: F28F 21/06, F28D 20/02, F24D 3/14, E04C 2/52

(54) **Heat storage module with system of caterpillary tubes and an assembly of these modules**

(30) Priority: 14.02.2012 CZ 20120102
(71) Applicant: Vysoke Uceni Technicke V Brne, 690 00 Brno (CZ)
(72) Inventor: Brzon, Roman, 39601 Humpolec (CZ); Ostry, Milan, 61300 Brno (CZ); Klubal, Tomas, 67545 Sebkovice (CZ)
(74) Representative: Malusek, Jiri

(57) **Abstract**

Heat storage module which is created by a basic plate (7) on which an expanded polystyrene board (6) is arranged, on the board (6) an adhesive layer (8) is spread and a systém (11) of capillary tubes (5) which lead into distributing and return pipes (4) which are provided both along the upper edge as along the lower edge of the module (1) is arranged on it, whereas on the systém (11) of capillary tubes (5) a mortar (9) containing micropellets with phase change materials is applied.

## Description

### Technical background

The invention relates a heat storage module with a mortar provided by micropelets from phase-change material (PCM) equipped with systems of capillary tubes for activation of the phase-change material.

### State of the art

The problems with overheating in the summer time is solved at present by installation of the air-condition.

There exists also an application of the systems of capillary tubes, which are the mats of capillars arranged parallel to each other, the capillars lead on the both sides into the transversaly distributing and return pipes. Such a system of capillary tubes is fasten on the wall and then the mortar with unsatisfactory thermal-accumulation properties is applied by a method of wet process.

Systems of capillary tubes of this type are known e.g. from DE 10 2006 061995 A1, DE 10 2010 016353 A1. DE 10 2007 045389 A1 or DE 10 2005 032559 A1. There are thin plastics tubes connected with inlet and outlet of the fluid, which is running through them.

There is an alternative solution which uses the flat radiate cooling, but there is a need for simultaneous production of cold and it does not enable the accumulation of the cold/heat in the mortar.

The aim of the invention is to present a heat storage module, which would combine the advantages of the radiate cooling/heating and the accumulation properties of the phase change materials dissolved in the mortar.

### Disclosure of the invention

The above mentioned disadvantages are eliminated into some extend by a heat storage module with systém of capillary tubes according to the invention which is created by a basic plate on which an expanded polystyrene board is arranged, on the board an adhesive layer is spread and a systém of capilalary tubes which lead into distributing and return pipes which are provided both along the upper edge as along the lower edge of the module is arranged on it, whereas on the systém of capillary tubes a mortar containing micropellets with phase change materials is applied.

Another feature is the assembly of heat storage modules, which is created by modules, which are connected to each other by screw joints on distributing and return pipes, by the method of dry assemblage.

### Brief description of the drawings

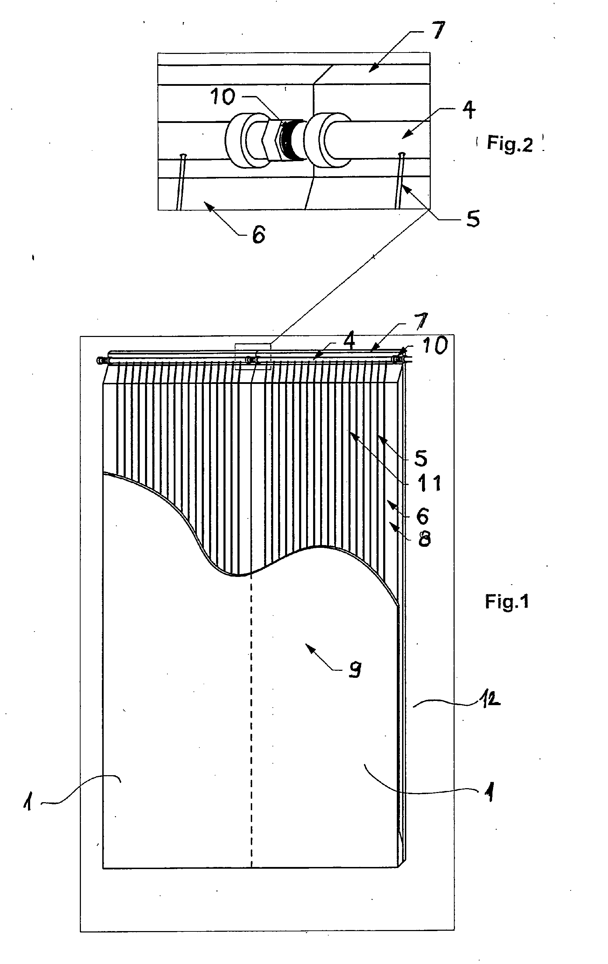

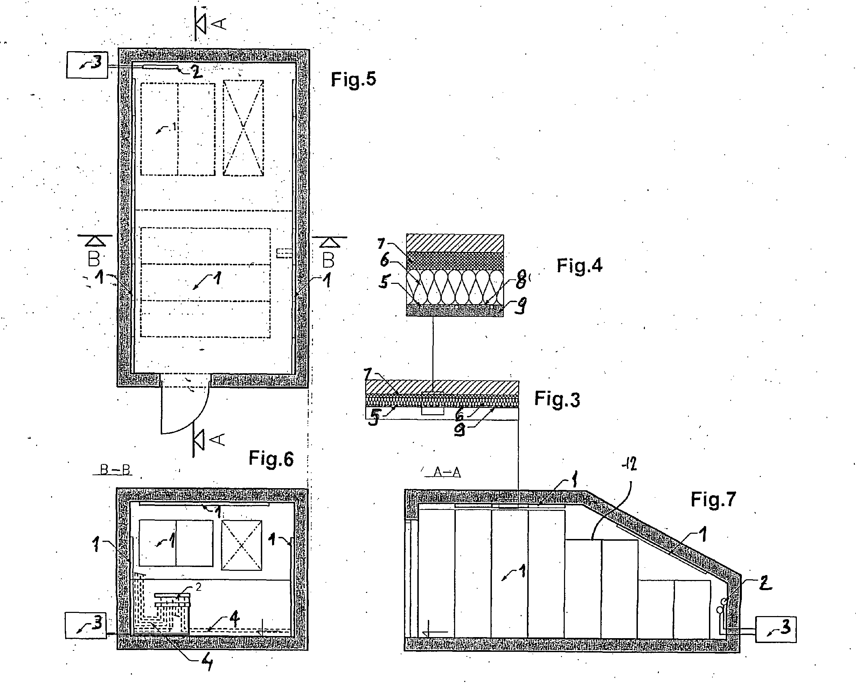

The invention will be explained by use of drawings where Fig.1 presents a general view on the heat storage module according to the invention, Fig.2 is a detail of the connection of capillary tube module with another capillary tube module, Fig.3 is a schematical cross-section of the heat storage module according to the invention, Fig.4 is a detail of the cross-section through the wall of the module from Fig.3, Fig.5 is a schematical view of a room viewed from above with distributed modules, Fig.6 is a cross-section from Fig.5 along the line B-B and Fig.7 is a cross-section from Fig.5 along the line A-A. and it presents the possible arrangement of heat storage modules on the wall.

### Preferred embodiments of the invention

On Fig.1 there is a common view on a pair of heat storage modules 1 creating an assembly 12. From the frontal view it can be seen, that the heat storage module 1 has as base a basic board 7 and on it an expanded polystyrene board 6 is arranged. A systém of capillary tubes 5 is good to see. Capillary tubes 5 lead into distributing and return pipes 4. Also a mortar 9 containing micropellets with phase change materials PCMs can be seen and this creates the surface of the heat storage module 1. Distributing and return pipes 4 are both along the upper edge, as it is illustrated, as along the lower edge, which is not shown.

On Fig.2 in detail the connection of the capillary tube module 1 with another capillary tube module 1 is shown. It can be seen that each module 1 contains two dismantable screw joints 10, by which the modules are mutually interconnected into the systems 11 of capillary tubes 5. The joining by srew joints 10 provided on the distributing and return pipes 4 enables to connect the modules into assemblies 12 by a method of dry assemblage, which is the great advantage of presented solution.

Fig.3 is a schematical cross-section of the heat storage module 1 and it is obvious that the heat storage module 1 is created by a basic board 7 and on it an expanded polystyrene board 6 is arranged and above it an adhesive layer 8 is spread, and this is in fact the joining layer and on such a way treated base the systém 11 of capillary tubes 5 is laid down. On system 11 of capillary tubes 5 the mortar 9 containing micropellets with phase change material (PCM) is applied which is better shown in detail in Fig.4.

Fig.5 is a schematical view of a room viewed from above with distributed assemblies 12 of modules 1 according to the invention. In the presented embodiments the modules 1 are spaced along the length of the room and on both opposite walls. Modules 1 are also on the ceiling. It is also good to see the placing of the distributors and collectors 2 for the specific cooling circuits.

Fig.6 is cross-section along the line B-B and Fig.7 is cross-section along the line A-A. Again it is good to see the placing of the distributors and collectors 2, which consist of a tube bringing the water and of a tube taking the water away and both tubes lead into the cooling/heating unit 3, which functions as cooling or in the contrary as heating unit, according to the wish how to temperate the room. It is good to see that modules 1 are mounted into assemblies 12 of four or two and if the ceiling is bevelled also the modules have corresponding reduced height.

The feature are modules 1, or from them, e.g. from two of such modules, created assemblies provided for passive colling in the summer time as well as low temperature heating in the winter, assembled by a method of dry assemblage with use of the accumulation of the latent heat. Module unit consists of a basic board 7 and on it an expanded polystyrene board 6 is arranged and above it the systém 11 of capillary tubes 5 is laid down. On system 11 of capillary tubes 5 the mortar 9 containing 30 % of micropellets with phase change material (PCM) is applied. The assembly 12 of the module units 1 can be simply made with use of the screw joins 10 welded on the distributing and return pipes 4 of the systems 11 of capillary tubes 5. Water is running though the systém 11 in one direction.

Heat storage module 1 uses the accumulation of the heat/cold due to the change of the state of aggregation of the phase change materials (PCMs) encapsuled in microcapsules. Distributing and return pipes 4 of polypropylene are both along the upper edge as along the lower edge of the module 1. On the ends of distributing and return pipes 4 screw joint 10 are welded for connection of further nodules into series consisting of one or more modules 1. Superfluous heat in the nterior, which is generated by the inner gains and gains of sunshine heat is during he day hours accumulated into the thermal accumulation mortar 9 containing 30% of micropellets of PCMs. The systém 11 of capillary tubes 5 is covered by the mortar 9 to ensure the perfect regeneration of the accumulated medium (delivery of the accumulated energy) during the night hours. Systems od capillary tubes are permanently filled with water. Due to that it comes to the enhance of the thermal accumlation capacity through the accumulation of the heat by water. During the night hours and peak hours cold water is running through the systems 11 of capillary tubes 5, the water enables delivery of accumulated energy. The screw joints 10 on the distributing and return pipes 4 enable easy connection of further modules into the specific distributing circuits. The tubes of the distributing and return pipes 4 then lead into the distributors and collectors 2. To the distributor 2 the outlet tube from cooling/heating unit 3 of air-water system is connected, where the cooling water is prepared during the cheaper electricity tariff in the out-of-peak hours. Outlet from the collector 2 is connected to the return tube on the source of cold. The system is regulated due to the sensors provided in the reservoirs arranged on the outlet and return tubes. Further regulation is possible according to the temperature of the interior of the room, which may not decline below the preset level. In cases when the night temperature in the room is below the temperature of PCMs crystallization, it is possible to consider the spontaneous delivery of the heat from the mortar 9. Due to that a radiate heating of the room and further energy savings are performed. The advatage of the systém is that it uses for the accumlation of the heat the reversible latent heat changes of PCMs. Unlike of other known systems of capillary tubes heating the assembly of heat storage modules enables the dry assemblage due to the welded screw joints 10. Basic plates 7,6 with integrated systems 11 with capillary tubes 5 and accumulation mortar 9 can be simply anchored to the wall by use of screws. In the figures there is a scheme of modules 1 with systems 11 with capillary tubes 5 and mortar 9 in a series arangement together with the source of cold, which is the cooling/heating unit 3.

In the winter the systém can be used as a capillary tubes heating, when the source of cold, it is cooling/heating unit 3 is replaced by a boiler for the inlet water. The assembly of modules then function as the ratiate heating.

The systém uses commertially produced systems 11 of capillary tubes 5 placed in a plaster mortar 9 with 30% share of PCMs. Unlike of other standard solutions the heat storage modules enables the dry assemblage and have an enhanced thermal accumulation properties.

The presented invention solves the use of the passive solar gais in the rooms and simultaneously prevents the overheating of the rooms in the summer time. The advantage of the systém is, that it enables the take-away of the accumulated energy from the thermal accumulation mortar in the summer time in cases, when it is not possible or desireable its release ito the interior of the room.

The advantage is also the fast assemblage on site and the elimination of the wet process. Further advantage is the possibility of using of the out-of-peak hours electrical energy for production of the cold or heat.

### Industrial applicability

Heat storage modules containing the accumulation mortar with systems of capilary tubes can be used in all kinds of buildings.

## Claims

1. Heat storage module, **characterized in that** it is created by a basic plate (7) on which an expanded polystyrene board (6) is arranged, on the board (6) an adhesive layer (8) is spread and a systém (11) of capilalary tubes (5) which lead into distributing and return pipes (4) which are provided both along the upper edge as along the lower edge of the module (1) is arranged on it, whereas on the systém (11) of capillary tubes (5) a mortar (9) containing micropellets with phase change materials is applied.

2. The assembly of heat storage modules, **characterized in that** it is created by modules (1) according to the claim 1, which are connected to each other by screw joints (10) on distributing and return pipes (4), by the method of dry assemblage.
